Europäisches Patentamt

(19) **European Patent Office**

Office européen des brevets

(11) Publication number: **0 244 064**
**B1**

(12) # EUROPEAN PATENT SPECIFICATION

(45) Date of publication of the patent specification:
**03.01.90**

(51) Int. Cl.⁴: **F16D 3/20, F16D 3/06**

(21) Application number: **87301889.9**

(22) Date of filing: **04.03.87**

(54) Telescopic tripot universal joint.

(30) Priority: **31.03.86  US 846053**

(43) Date of publication of application:
**04.11.87 Bulletin 87/45**

(45) Publication of the grant of the patent:
**03.01.90 Bulletin 90/1**

(84) Designated Contracting States:
**DE FR**

(56) References cited:
**CH-A- 440 860**
**FR-A- 1 442 991**
**FR-A- 2 554 532**
**GB-A- 2 099 551**
**US-A- 3 125 870**
**US-A- 3 584 474**
**US-A- 3 884 051**

(73) Proprietor: **GENERAL MOTORS CORPORATION,**
**General Motors Building 3044 West Grand Boulevard,**
**Detroit Michigan 48202(US)**

(72) Inventor: **Farrell, Robert Clifford, 165 Harvest Lane,**
**Frankenmuth Michigan 48734(US)**
Inventor: **Schultz, Raymond Joseph, 420 Westchester**
**Road, Saginaw Michigan 48603(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to telescopic tripot universal joints as specified in the preamble of claim I, for example as disclosed in US-A-3 I25 870.

Stroking-type tripot universal joints are employed in automotive vehicle axle driveshafts and especially in front-wheel drive vehicles between the transaxle differential and the driving wheel. A stroking or sliding constant velocity joint should not only transmit the torque at various speeds, angles and telescoping positions, but also prevent any vibrations of the engine from being transmitted through the joint and driveshaft to the driving wheel and the vehicle structure.

In addition, when the universal joint operates at an angle, it should not produce any oscillating axial excitation which may be capable of initiating vibrations in the driveshaft or in the structure of the vehicle.

US-A-3 I25 870 discloses a conventional telescopic-type tripot universal joint of the prior art which has been one of the best stroking-type universal joints available for isolating engine vibrations from the rest of the vehicle. However, these conventional prior-art tripot universal joints, due to their operating frictional characteristics, produce internally generated oscillating axial forces which are related to the transmitted torque and the joint angle. During severe accelerations at low vehicle speeds, these cyclic axial forces can be of sufficient magnitude to produce a "shudder" type of disturbance which has a frequency equal to three times the shaft speed.

The conventional tripot joint consists typically of an outer housing member with three equally spaced axial ball bores drivably connected to an inner shaft spider member by means of three trunnion-mounted drive balls which are capable of rotatable and slidable movement on their respective spider trunnions.

When the outer and inner drive members are aligned at a zero-degree joint angle and axial stroking is imposed on the joint under a torsional load, pure rolling motion occurs between the balls and their corresponding ball bores. However, when such a joint is operated with the outer and inner drive members angularly inclined to one another, the balls are brought into an inclined relation with their respective ball bores, so that each ball does not roll in the direction of its corresponding bore, and consequently some sliding or skidding, as well as rolling motion, takes place between the two contacting surfaces. As the joint angle increases, the amount of sliding also increases, and the amount of rolling decreases. As the joint rotates, this relative rolling-to-sliding relationship of each ball in its housing ball bore varies in an oscillating manner, and produces a cyclic axial force along the rotational axis of the joint which has a frequency of three times the shaft speed.

In addition, as the joint rotates at an angle, relative endwise sliding movement of each ball on its corresponding spider trunnion also varies in a similar oscillating manner due to the three-per-revolution orbiting characteristic of the joint. These effects are additive (that is, additional) to the previously described cyclic axial force produced by the contact relationship between each ball and the respective housing ball bore.

JP-A 59 040 016 discloses another universal joint in which trunnions can slide in the radial direction in cylindrical holes in guide rings, which are, in turn, restricted to slide in grooves in drive channels. This arrangement does not overcome the above disadvantages, and is such that relatively high stress levels are produced when the trunnions transmit torque to the cylindrical holes. This, in turn, produces roughness in the operation of the joint because the guide rings slide on the trunnions in the radial direction, as well as pivot.

FR-A 2 554 532 discloses a tripot joint in which a separate, linear bearing assembly comprising needles and a cage is disposed against a slide on each side of a spherical trunnion. The bearing assemblies are resiliently centred by springs.

GB-A 2 099 551 also discloses an arrangement in which the cages are radially maintained in position relative to the triplanar element. FR-A 1 442 991 discloses a universal joint in which the movement of the bearing assemblies is restricted. As with JP-A 59 040 016, none of these known arrangements disclose a bearing assembly which is free to tilt and move radially in the drive channel.

The present invention is concerned with providing a telescopic tripot universal joint which substantially reduces or eliminates the overall level of the frictional effects and the resultant internally generated cyclic axial force produced by a conventional telescopic universal joint.

To this end a telescopic tripot universal joint in accordance with the present invention is characterised by the features specfied in the 5 characterising portion of claim 1.

A telescopic tripot universal joint in accordance with the present invention thereby makes available the following features:

a) three spherical trunnions are spaced at angles or substantially 120 degrees from each other around the rotational axis of the inner drive member;

b) the outer drive member or housing has three equally spaced drive channels in which the sides are planar surfaces that are parallel to each other and parallel to the rotational axis or the outer drive member;

c) three drive assemblies are pivotally mounted on the three spherical trunnions and disposed in the three drive channels;

d) the drive assemblies comprise intermediate drive blocks which carry bearing rollers that engage the planar surfaces or the drive channels to transmit torque via the intermediate drive blocks; and

e) the bearing rollers are retained in the intermediate drive blocks by cage means which do not move relative to the intermediate drive block, thereby increasing the stroking capability or the joint.

In the drawings:

Figure I is a fragmentary longitudinal section, with parts shown in elevation, of a first embodiment of a telescopic tripot universal joint in accordance with the present invention;

Figure 2 is a cross-section substantially on the line 2--2 of Figure I, in the direction of the arrows;

Figure 3 is a fragmentary section substantially on the line 3--3 of Figure I, in the direction of the arrows;

Figure 4 is a perspective view of an intermediate drive assembly constituting a component of the telescopic tripot universal joint shown in Figures I, 2 and 3;

Figure 5 is a bottom view of the component shown in Figure 4;

Figure 6 is a cross-sectional view of a second embodiment of a telescopic tripot universal joint in accordance with the present invention;

Figure 7 is a fragmentary section substantially on the line 7--7 of Figure 6, in the direction of the arrows;

Figure 8 is a fragmentary cross-sectional view of a third embodiment of a telescopic tripot universal joint in accordance with the present invention; and

Figure 9 is a fragmentary section substantially on the line 9--9 of Figure 8, in the direction of the arrows.

With reference now to the drawings, and more particularly to Figures I to 5, a first embodiment of a telescopic tripot universal joint I0 in accordance with the present invention comprises an inner drive member I2, an outer drive member I4 and a plurality of intermediate drive assemblies I6.

The outer drive member I4 has a longitudinal axis I8 about which it may be rotated, and it also has three radial drive channels 20 which are equally spaced at angles of substantially I20 degrees apart. Each radial drive channel 20 includes two radially extending planar surfaces 22 which are parallel to each other and parallel to the longitudinal axis I8.

The inner drive member I2 has a longitudinal axis 24 about which it may rotate. The longitudinal axes I8 and 24 coincide when the tripot universal joint I0 is at zero angle as shown in solid lines in Figure I, and intersect at a joint centre O when the tripot universal joint is articulated (bent) at an oblique angle as shown in phantom lines in Figure I.

The inner drive member I2 has three radial trunnions 26 equally spaced at angles of substantially I20 degrees apart on coplanar radial axes 27 which intersect the longitudinal axis 24 perpendicularly at a centre A. The centre A of the inner drive member I2 is displaced from the longitudinal axis I8 of the outer drive member I4, and when the tripot universal joint I0 is articulated and rotated at a given speed the centre A orbits around the joint centre O at three times the joint speed. The radial trunnions 26 comprise truncated spherical (ball-like) portions, with the truncation providing spherical bearing surfaces 28 in the longitudinal direction of the inner drive member I2 and flat surfaces 30 which are perpendicular to the longitudinal axis 24, as best seen in Figure 3. The flat surfaces 30 are provided for assembly purposes, as explained below. The radial trunnions 26 are disposed in the respective radial drive channels 20 with their spherical bearing surfaces 28 in confronting relation with the planar surfaces 22 of the respective radial drive channels 20, as seen in Figures 2 and 3.

The three intermediate drive assemblies I6 are disposed in the respective radial drive channels 20 and pivotally mounted on the respective radial trunnions 26. Each intermediate drive assembly I6 comprises an intermediate drive block 32, a plurality of bearing rollers 34, and roller cage means 36 retaining the bearing rollers 34.

The intermediate drive block 32 has a continuous (endless) roller track 40 which circumscribes an imaginary radial centre-line 38 in parallel fashion. The continuous roller track 40 includes two planar surfaces 42 which are disposed parallel to each other and to the radial centre-line 38, and are disposed parallel to and facing the planar surfaces 22 of the radial drive channel 20 in which the intermediate drive block 32 is disposed. The intermediate drive block 32 also has a concentric spherical socket 44 which fits on to the spherical bearing surfaces 28 of the radial trunnion 26, whereby the intermediate drive block 32 is pivotally mounted on the radial trunnion 26 that is disposed in the same radial drive channel 20 as that in which the intermediate drive block 32 is disposed. Two assembly slots 45 extend from an opening of the spherical socket 44 adjacent the hub of the inner drive member I2 to the equator of the spherical socket, these assembly slots 45 being wide enough to permit entry of the spherical bearing surfaces 28 of the trunnions 26 for assembly purposes, as explained below.

A full complement of bearing rollers 34 is disposed on the continuous roller track 40 so that a number of bearing rollers 34 are disposed between the planar surfaces 42 of the intermediate drive block 32 and the planar surfaces 22 of the radial drive channel 20 in which the intermediate drive block 32 is disposed.

The roller cage means 36 is carried by the intermediate drive block 32 and retains the bearing rollers 34 for rotation about axes which are substantially parallel to the radial centre-line 38 of the intermediate drive block 32, and for engagement with the planar surfaces 22 of the radial drive channel 20 to transfer torque via the intermediate drive block 32. In this particular instance the roller cage means 36 comprise upper and lower ledges 46 and 48 of the intermediate drive block 32 which retain the bearing rollers 34 in the centre-line direction of the intermediate drive block 32, and two sheet metal cage pieces 50 and 52 which are attached to the longitudinal ends of the intermediate drive block 32.

The sheet metal cage pieces 50 and 52 provide overhanging flanges 54 at the longitudinal ends of the continuous roller track 40, and also provide covers 56 at the corners leading to the two planar surfaces 42. The overhanging flanges 54 and the covers 56 retain the bearing rollers 34 in the direction radially of the centre-line 38 for the portions of the continuous roller track 40 between the two planar surfaces 42. For the two planar surface portions of the continuous roller track 40, the bearing rollers 34 are retained by grease until the tripot universal joint 10 is assembled, whereupon the planar surfaces 22 of the associated radial drive channel 20 retain the bearing rollers 34.

The upper and lower ledges 46 and 48 and the sheet metal cage pieces 50 and 52 are fixedly mounted on the intermediate drive block 32 so that the roller cage means 36 is not displaced relative to the intermediate drive block 32 during operation of the tripot universal joint 10. The bearing rollers 34 roll along the continuous roller track 40 in the manner of a recirculating roller bearing as the radial trunnions 26 and the intermediate drive blocks 32 are displaced relative to the radial drive channels 20 during operation of the tripot universal joint 10.

A slight clearance is provided between the planar surfaces 22 of the radial drive channel 20 and the intermediate drive assembly 16, so that when the joint is stroked axially with torque applied in one direction of rotation, only the active bearing rollers 34 on the torque side of the drive block 32 are under load while rolling in a given direction. Thus the bearing rollers 34 on the opposite side of the drive block 32 are unloaded, and are free to travel without interference in the opposite linear direction, as they must do since all the bearing rollers 34 in the assembly are part of a recirculating train.

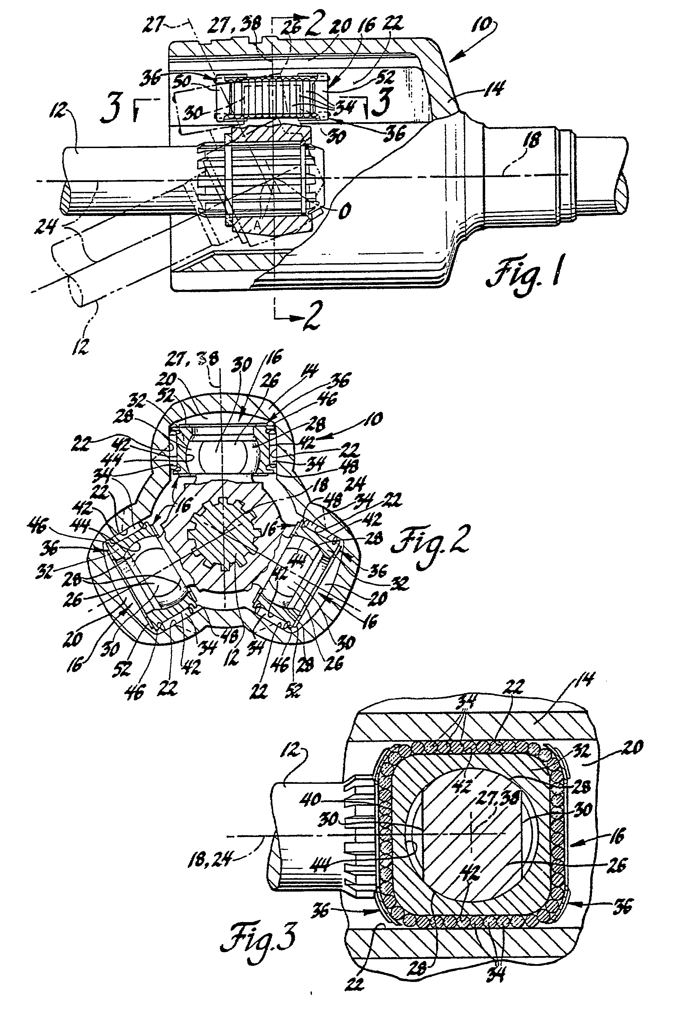

When the tripot universal joint 10 operates at an angle, the intermediate drive assemblies 16 assume varying angular pivoting (tilting) positions on the spherical trunnions 16 during one revolution of the joint, as indicated in phantom lines in Figure 1. This occurs because of the engagement of the active bearing rollers 34 with the planar surfaces 22 of the drive channels 20. Since the drive assembly 16 permits rolling movement of the bearing rollers 34, the intermediate drive block 32 can pivot on its mating spherical trunnion 26 to an angle of approximately one-half of the joint angle. This maximum pivoting angle can be achieved only during the rotational position at which the two parallel lines of bearing rollers 34 on the active and inactive sides of the intermediate drive block are aligned with the surfaces 22 of the drive channels 20.

Since the tripot joint 10 must also orbit during rotation like the conventional type of tripot joint, endwise sliding or skidding movement occurs at the contact surfaces between the bearing rollers 34 and the parallel surfaces 22 of the drive channels 20. However, due to the previously described rolling characteristics of the rolling elements in the roller assemblies, the overall level of the frictional effects and the resultant cyclic axial force is significantly reduced, and consequently the tripot joint 10 substantially reduces or eliminates the "shudder" disturbance level in a front-wheel drive vehicle. In addition, the reduced frictional effects reduce heat generation, and improve wear life of the universal joint.

The intermediate drive blocks 32, bearing rollers 34 and sheet metal cage pieces 50 and 52 are manufactured as unit-handled drive assemblies 16 such as the unit-handled drive assembly 16 shown in Figure 4. The typical drive assembly 16 is mounted on its associated radial trunnion 26 by inserting the spherical bearing surfaces 28 of the radial trunnion 26 into the socket 44 through the assembly slots 45 and then indexing the the drive assembly through an angle of 90 degrees so that the spherical bearing surfaces 28 are thereby trapped in the unslotted spherical portions of the socket 44, as shown in Figure 2.

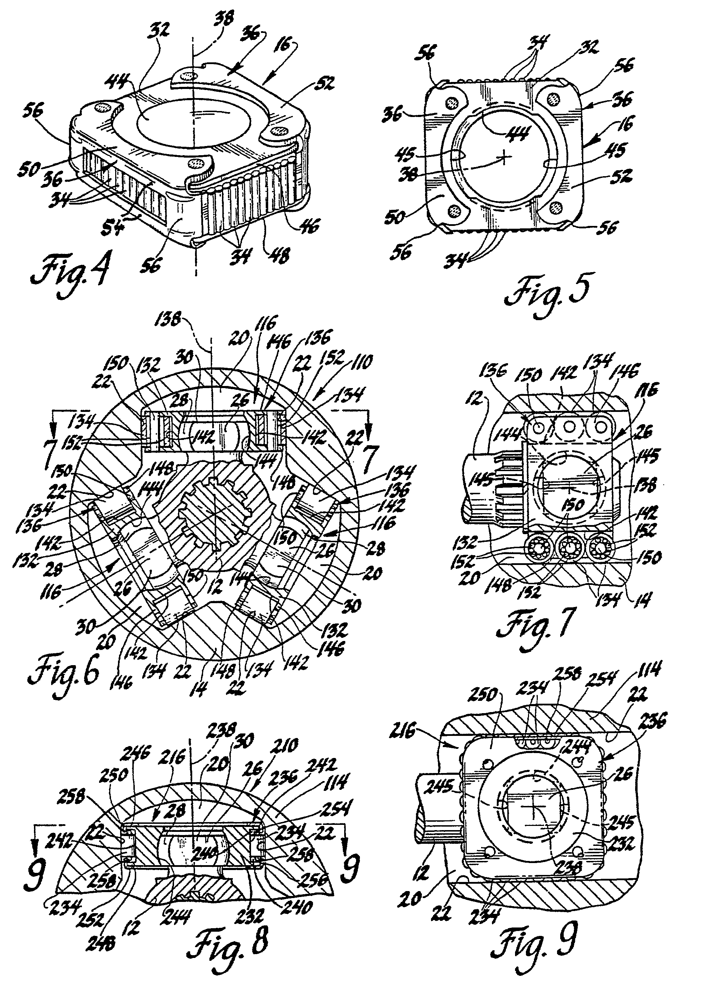

With reference now to Figures 6 and 7, a second embodiment of a telescopic tripot universal joint 110 in accordance with the present invention is illustrated which is substantially identical to the telescopic tripot universal joint 10 of the first embodiment except for the construction of three intermediate drive assemblies 116.

Consequently, like elements of the tripot universal joints 10 and 110, other than those which form part of the intermediate drive assemblies 16 or 116, are identified with like reference numerals in the several views.

In the embodiment of a telescopic tripot universal joint 110 in accordance with the present invention which is shown in Figures 6 and 7, the three drive assemblies 116 are, as before, disposed in the respective radial drive channels 20 and pivotally mounted on the respective radial trunnions 26. Each drive assembly 116 correspondingly comprises an intermediate drive block 132, a plurality of bearing rollers 134, and roller cage means 136 retaining the bearing rollers 134.

The intermediate drive block 132 has an imaginary radial centre-line 138 and two planar surfaces 142 which are disposed parallel to each other and to the radial centre-line 138 and are disposed parallel to and facing the planar surfaces 22 of the radial drive channel 20 in which the intermediate driving block 132 is disposed. The intermediate drive block 132 also has a concentric spherical socket 144 which fits on to the spherical bearing surfaces 28 of the radial trunnion 26, whereby the intermediate drive block 132 is pivotally mounted on the radial trunnion 26 disposed in the radial drive channel 20 in which the intermediate drive block 132 is disposed. Two assembly slots 145 extend from an opening of the spherical socket 144 to the equator of the spherical socket, these assembly slots 145 being wide enough to permit entry of the spherical bearing surfaces 28 of the trunnions 26 for assembly purposes, as explained below.

In this second embodiment, separate complements of bearing rollers 134 are provided, so that a different set of bearing rollers 134 is disposed between each of the planar surfaces 142 of the intermediate drive block 132 and the planar surfaces 22 of the radial drive channel 20 in which the intermediate drive block 132 is disposed.

The roller cage means 136 is carried by the intermediate drive block 132, and retains the bearing rollers 134 for rotation about axes which are substantially parallel to the radial centre-line 138 of the intermediate drive block 132 and for engagement with the planar surfaces 22 of the radial drive channel 20 to transfer torque via the intermediate drive block 132.

In this embodiment, the roller cage means 136 comprises upper and lower ledges 146 and 148 of the intermediate drive block 132 which retain the bearing rollers 134 in the centre-line direction of the intermediate drive block 132, and a plurality of pintles 150 which are attached to the upper and lower ledges 146 and 148 of the intermediate drive block 132. These pintles 150 are disposed parallel to the imaginary centre-line 138 of the intermediate drive block 132, and serve as inner bearing races which retain the bearing rollers 134 in the direction radially of the centre-line 138. The bearing rollers 134 are rotatably mounted on the pintles 150 by means of roller complements 152; however, a plain bearing arrangement may suffice in some instances.

The upper and lower ledges 146 and 148 and the pintles 150 are fixedly mounted on the intermediate drive block 132 so that the roller cage means 136 is not displaced relative to the intermediate drive block 132 during operation of the tripot universal joint 110. The pintles 150 rotatably mount the bearing rollers 134 so that the bearing rollers 134 are spaced from the planar surfaces 142 of the intermediate drive member 116 and roll along the planar surfaces 22 of the outer drive member 14 as the radial trunnions 26 and the intermediate drive blocks 132 are displaced relative to the radial drive channels 20 during operation of the tripot universal joint 110.

In the tripot universal joint 110, a slight clearance between the bearing rollers 134 and the planar surfaces 22 of the radial drive channels 20 is also beneficial. Such a clearance reduces the frictional effects that occur when the inner drive member 12 orbits during joint rotation, because only the bearing rollers 134 on the torque side of the intermediate drive block 132 slide or skid in an endwise manner.

The intermediate drive blocks 132, bearing rollers 134, pintles 150 and bearing complements 152 are also manufactured as unit-handled drive assemblies 116. The typical drive assembly 116 is mounted on its associated radial trunnion 26 by inserting the spherical bearing surfaces 28 of the radial trunnion 26 into the socket 144 through the assembly slots 145, and then indexing the drive assembly through an angle of 90 degrees so that the spherical bearing surfaces 28 are thereby trapped in the unslotted spherical portions of the socket 144, as shown in Figure 6.

With reference now to Figures 8 and 9, a third embodiment of a telescopic tripot universal joint 210 in accordance with the present invention is illustrated which is substantially identical to the telescopic tripot universal joints 10 and 110 shown in Figures 1 to 7 except for the construction of three intermediate drive assemblies 216.

Consequently, like elements of the tripot universal joints 10, 110 and 210, other than those which form part of the intermediate drive assemblies 16, 116 or 216, are identified with like reference numerals in the several views.

In the third embodiment of a telescopic tripot universal joint 210 in accordance with the present invention which is shown in Figures 8 and 9, the three intermediate drive assemblies 216 are disposed in the respective radial drive channels 20 and pivotally mounted on the spherical trunnions 26, and each drive assembly 216 comprises an intermediate drive block 232, a plurality of bearing rollers 234, and roller cage means 236, as previously.

The intermediate drive block 232 has an imaginary radial centre-line 238 and a continuous (endless) roller track 240 which circumscribes the radial centre-line and includes two planar surfaces 242 that are parallel to each other and to the radial centre-line 238 and are disposed parallel to and facing the planar surfaces 22 of the radial drive channel 20 in which the intermediate driving block 232 is disposed. The intermediate drive block 232 also has a concentric spherical socket 244 which fits on to the spherical bearing surfaces 28 of the radial trunnion 26, whereby the intermediate drive block 232 is pivotally mounted on the radial trunnion 26 disposed in the radial drive channel 20 in which the intermediate drive block 232 is disposed. Two assembly slots 245 extend from an opening of the spherical socket 244 to the equator of the spherical socket, these assembly slots 245 being wide enough to permit entry of the spherical bearing surfaces 28 of the trunnions 26 for assembly purposes, as explained below.

A full complements of bearing rollers 234 is provided for the roller track 240, so that a number of bearing rollers 234 are disposed between each of the planar surfaces 242 of the intermediate drive block 232 and the respective planar surface 22 of the radial drive channel 20 in which the intermediate drive block 232 is disposed.

The roller cage means 236 is carried by the intermediate drive block 232, and retains the bearing rollers 234 for rotation about axes which are substantially parallel to the radial centre-line 238 of the intermediate drive block 232, and for engagement with the planar surfaces 22 of the radial drive channel 20 to transfer torque via the intermediate drive block 232. In this embodiment the roller cage means 236 comprises upper and lower ledges 246 and 248 of the intermediate drive block 232 which retain the bearing rollers 234 in the centre-line direction of the intermediate drive block 232, and also upper and lower flanged sheet metal cage pieces 250 and 252.

The cage pieces 250 and 252 are attached to the top and bottom of the intermediate drive block 232 so that their respective flanges 254 and 256 provide upper and lower flanges which extend around the entire periphery of the intermediate drive block 232 in an overhanging relationship with the upper and lower ledges 246 and 248 respectively. The bearing rollers 234 have integral end pintles 258 which are disposed inwardly of the flanges 254 and 256 that overhang the upper and lower ledges 246 and 248 of the intermediate drive block 232, and thus the cage pieces 250 and 252 retain the bearing rollers 234 in the direction radially of the centre-line 238 for their entire travel around the continuous roller track 240.

The upper and lower ledges 246 and 248 and the cage pieces 250 and 252 are fixedly mounted on the intermediate drive block 232 so that the roller cage means 236 is not displaced relative to the intermediate drive block 232 during operation of the tripot

universal joint 2l0. The bearing rollers 234 roll along the continuous roller track 240 in the manner of a recirculating roller bearing as the radial trunnions 26 and the intermediate drive blocks 232 are displaced relative to the radial drive channels 20 during operation of the telescopic tripot universal joint 2l0. As previously, a slight clearance is provided so that only the active bearing rollers 234 are under load, and the complement of bearing rollers 234 can circulate with a minimum of resistance.

The intermediate drive blocks 232, bearing rollers 234 and cage pieces 250 and 252 are likewise manufactured as unit-handled drive assemblies 2l6. The typical drive assembly 2l6 is mounted on its associated radial trunnion 26 by inserting the spherical bearing surfaces 28 of the radial trunnion 26 into the socket 244 through the assembly slots 245, and then indexing the the drive assembly through an angle of 90 degrees so that the spherical bearing surfaces 28 are thereby trapped in the unslotted spherical portions of the socket 244, as shown in Figure 8.

## Claims

1. A telescopic tripot universal joint (10) comprising a first drive member (14) having three circumferentially spaced radial drive channels (20), each of which includes two radially extending, planar surfaces (22) which are parallel to each other; a second drive member (12) having a radial trunnion (26) disposed in each radial drive channel (20), each radial trunnion (26) having spherical bearing surfaces (28); and a drive assembly (16) associated with each radial trunnion (26), each drive assembly (16) comprising an intermediate drive block (32) having spaced surfaces (42) facing the planar surfaces (22) of the respective radial drive channels (20), rollers (34) disposed adjacent the spaced surfaces (42) and engageable with the planar surfaces (22) of the associated radial drive channel (20), and roller cage means (36) which retains the rollers (34) and which is fixedly mounted on the intermediate drive block (32) to move in unison with the intermediate drive block (32) during operation of the telescopic tripot universal joint; characterised in that: each drive assembly (16) is pivotally mounted in a fixed radial position on the spherical bearing surfaces (28) or the respective radial trunnion (26), and in that the radially extending, planar surfaces (22) of the radial drive channels (20) are configured to permit tilting and radial movement of the associated drive assemblies (16) in the radial drive channels (20) during operation of the telescopic tripot universal joint.

2. A telescopic tripot universal joint according to claim 1, wherein the intermediate drive blocks (32) have spherical sockets (44) which fit onto the spherical bearing surfaces (28) or the respective radial trunnions (26).

3. A telescopic tripot universal joint according to claim 1 or 2, wherein each intermediate drive block (32) has a continuous roller track (40) around its circumference, and which defines the spaced surfaces (42), and wherein a plurality of bearing rollers (34), which define the rollers, are disposed on the respective continuous roller track (40).

4. A telescopic tripot universal joint according to claim 3, wherein each intermediate drive block (32) has a full complement or bearing rollers (34) disposed on its continuous roller track (40).

5. A telescopic tripot universal joint according to claim 3 or 4, wherein the roller cage means (36) comprises upper and lower ledges (46, 48) of the intermediate drive block (32) which define the continuous roller track (40), and cage pieces (50, 52) which are attached to the intermediate drive block (32) and which retain the bearing rollers (34) in the continuous roller track (40) for at least the portions of the continuous roller track (40) between the spaced surfaces (42).

6. A telescopic tripot universal joint according to claim 5, wherein the cage pieces (50, 52) include flanges (54) which overhang the upper and lower ledges (46, 48) at the portions of the continuous roller track (40) between the spaced surfaces (42), and covers (56) at the corners of the continuous roller track (40) leading to the spaced surfaces (42), and wherein the bearing rollers (34) adjacent the spaced surfaces (42) are retained between the upper and lower ledges (46, 48) by grease until the telescopic tripot universal joint (10) is assembled.

7. A telescopic tripot universal joint according to claim 1 or 2, wherein the rollers comprise bearing rollers (134), and wherein the roller cage means (136) comprises upper and lower ledges (146, 148) of the intermediate drive block (132) which retain the bearing rollers (134) adjacent the spaced surfaces (142), and members (150) which are attached to the intermediate drive block (132) to retain the bearing rollers (134) between the ledges (146, 148).

8. A telescopic tripot universal joint according to claim 7, wherein the members for retaining the bearing rollers (134) comprise pintles (150) which are attached to the upper and lower ledges (146, 148) of the intermediate drive block (132) and rotatably mount the bearing rollers (134) for engagement with the planar surfaces (22) of the radial drive channel (20) in which the intermediate drive block (132) is disposed.

9. A telescopic tripot universal joint according to any one of claims 1 to 8, wherein the spaced surfaces (42) of each intermediate drive block (32) are parallel to each other, and are disposed parallel to the radially extending planar surfaces (22) of the radial drive channel (20) in which the intermediate drive block (32) is disposed.

## Patentansprüche

1. Teleskopisches Dreibein-Kreuzgelenk (10) mit einem ersten Antriebsglied (14) mit drei in Umfangsrichtung mit Abstand angebrachten radialen Antriebsprofilen (20), von denen jedes zwei sich parallel zueinander radial erstreckende planare Flächen (22) enthält: einem zweiten Antriebsglied (12) mit je einem in jedem radialen Antriebsprofil (20) angeordneten radialen Drehzapfen (26), wobei jeder radiale Drehzapfen (26) sphärische Lagerflächen (28) besitzt; und je einer jedem radialen Drehzapfen (26) zugeordneten Antriebsanordnung (16), wobei jede Antriebsanordnung (16) einen Zwischenantriebsklotz (32) umfaßt mit beabstandeten Flächen (42), die den planaren Flächen (22) der jeweiligen radialen Antriebsprofile (20) zugewendet sind, benachbart zu den beabstandeten Flächen (42) angeordneten und mit den planaren Flächen (22) des zugeordneten radialen Antriebsprofils (20) in Eingriff bringbaren Walzen (30), und Walzenkäfigmittel (36), welches die Walzen (34) zurückhält und fest an dem Zwischenantriebsklotz (32) angebracht ist, um sich während des Betriebs des teleskopischen Dreibein-Kreuzgelenkes gleichlaufend mit dem Zwischenantriebsklotz (32) zu bewegen, dadurch gekennzeichnet, daß jede Antriebsanordnung (16) schwenkbar in einer festgelegten Radialstellung an den sphärischen Lagerflächen (28) des jeweiligen radialen Drehzapfens (26) angebracht ist und daß die sich radial erstreckenden planaren Flächen (22) der radialen Antriebsprofile (20) so gestaltet sind, daß sie Kipp- und Radialbewegung der zugeordneten Antriebsanordnungen (16) in den radialen Antriebsprofilen (20) während des Betriebes des teleskopischen Dreibein-Kreuzgelenks zulassen.

2. Teleskopisches Dreibein-Kreuzgelenk nach Anspruch 1, bei dem die Zwischenantriebsklötze (32) sphärische Muffen (44) besitzen, die auf die sphärischen Lagerflächen (28) der jeweiligen radialen Drehzapfen (26) passen.

3. Teleskopisches Dreibein-Kreuzgelenk nach Anspruch 1 oder 2, bei dem jeder Zwischenantriebsklotz (32) einen kontinuierlichen Walzenlauf (40) um seinen Umfang besitzt, der die beabstandeten Flächen (42) bestimmt, und wobei eine Vielzahl von Lagerwalzen (34), welche die Walzen bestimmen, an dem jeweiligen kontinuierlichen Walzenlauf (40) angeordnet sind.

4. Teleskopisches Dreibein-Kreuzgelenk nach Anspruch 3, bei dem jeder Zwischenantriebsklotz (32) einen vollständigen Satz von Lagerwalzen (34) an seinem kontinuierlichen Walzenlauf (40) angeordnet besitzt.

5. Teleskopisches Dreibein-Kreuzgelenk nach Anspruch 3 oder 4, bei dem das Walzenkäfigmittel (36) obere und untere Leisten (46, 48) des Zwischenantriebsklotzes (32) umfaßt, welche den kontinuierlichen Walzenlauf (40) bestimmen, und Käfigstücke (50, 52), die an dem Zwischenantriebsklotz (32) angebracht sind und die Lagerwalzen (34) in dem kontinuierlichen Walzenlauf (40) wenigstens in den Abschnitten des kontinuierlichen Walzenlaufes (40) zwischen den beabstandeten Flächen (42) halten.

6. Teleskopisches Dreibein-Kreuzgelenk nach Anspruch 5, bei dem die Käfigstücke (50, 52) Flansche (54) enthalten, welche die oberen und unteren Leisten (46, 48) an den Abschnitten des kontinuierlichen Walzenlaufes (40) zwischen den beabstandeten Flächen (42) übergreifen, und Decken (56) an den Winkeln des kontinuierlichen Walzenlaufes (40), die zu den beabstandeten Flächen (42) führen, und bei dem die den beabstandeten Flächen (42) benachbarten Lagerwalzen (34) zwischen den oberen und unteren Leisten (46, 48) durch Fett zurückgehalten sind, bis das teleskopische Dreibein-Kreuzgelenk (10) zusammengebaut ist.

7. Teleskopisches Dreibein-Kreuzgelenk nach Anspruch 1 oder 2, bei dem die Walzen Lagerwalzen (134) umfassen und bei dem das Walzenkäfigmittel (134) obere und untere Leisten (146, 148) des Zwischenantriebsklotzes (132) umfaßt, welche die Lagerwalzen (134) benachbart den beabstandeten Flächen (142) zurückhalten, und Glieder (150), welche an dem Zwischenantriebsklotz (132) zum Zurückhalten der Lagerwalzen (134) zwischen den Leisten (146, 148) angebracht sind.

8. Teleskopisches Dreibein-Kreuzgelenk nach Anspruch 7, bei dem die Glieder zum Zurückhalten der Lagerwalzen (134) an den oberen und unteren Leisten (146, 148) des Zwischenantriebsklotzes (132) angebrachte Drehbolzen (150) umfassen, welche die Lagerwalzen (134) drehbar zur Anlage an den planaren Flächen (22) des radialen Antriebsprofils (20) halten, in dem der Zwischenantriebsklotz (132) sitzt.

9. Teleskopisches Dreibein-Kreuzgelenk nach einem der Ansprüche 1 bis 8, bei dem die beabstandeten Flächen (42) jedes Zwischenantriebsklotzes (32) parallel zueinander und parallel zu den sich radial erstreckenden planaren Flächen (22) des radialen Antriebskanals (20) angeordnet sind, in dem der Zwischenantriebsklotz (32) sitzt.

## Revendications

1. Joint universel tripode télescopique (10), comprenant un premier élément d'entraînement (14) qui présente trois gorges d'entraînement radiales (20) espacées circonférentiellement et dont chacune présente deux surfaces planes (22) s'étendant radialement et parallèlement l'une à l'autre; un deuxième élément d'entraînement (12) possédant un tourillon radial (26) qui est disposé dans chaque gorge d'entraînement radiale (20) et qui possède des surfaces de portée sphériques (28); et un ensemble d'entraînement (16) qui est associé à chaque tourillon radial (26), et qui comprend un bloc d'entraînement intermédiaire (32) qui possède des surfaces espacées (42) qui font face aux surfaces planes (22) des gorges d'entraînement radiales (20) correspondantes, des rouleaux (34) disposés contigüs aux surfaces espacées (42) et qui peuvent coopérer avec les surfaces planes (22) de la gorge d'entraînement radiale (20) correspondante, et des moyens (36) du type cage à rouleaux (34) qui sont montés fixes sur le bloc d'entraînement intermédiaire (32) pour se déplacer conjointement avec le bloc d'entraînement intermédiaire (32) pendant le fonctionnement du joint universel tripode télescopique, caractérisé en ce que: chaque ensemble d'entraînement (16) est monté pivotant dans une position radiale fixe sur les surfaces de portée sphériques (28) de son tourillon (26) particulier, et en ce que les surfaces planes (22), orientées radialement, des gorges d'entraînement radiales (20) sont configurées pour permettre un mouvement d'inclinaison et radial des ensembles d'entraînement (16) qui leur sont associés dans les gorges d'entraînement radiales (20) pendant le fonctionnement du joint universel tripode télescopique.

2. Joint universel tripode télescopique selon la revendication 1, dans lequel les blocs d'entraînement intermédiaires (32) présentent des alvéoles sphériques (44) qui se montent sur les surfaces de portée sphériques (28) de leurs tourillons radiaux (26) propres.

3. Universel tripode télescopique selon la revendication 1 ou 2, dans lequel chaque bloc d'entraînement intermédiaire (32) présente un chemin de roulement continu (40) le long de sa périphérie, qui définit les surfaces espacées (42), et dans lequel une multitude d'éléments de roulement (34) en rouleaux, sont disposés sur le chemin de roulement de rouleaux continu (40) correspondant.

4. Joint universel tripode télescopique selon la revendication 3, dans lequel chaque bloc d'entraînement intermédiaire (32) possède une garniture complète de rouleaux de roulement (34) disposés sur son chemin de roulement de rouleaux continu (40).

5. Joint universel tripode télescopique selon la revendication 3 ou 4, dans lequel les moyens (36) du type cage à rouleaux comprennent des rebords supérieurs et inférieurs (46, 48) du bloc d'entraînement intermédiaire (32) qui définissent le chemin de roulement de rouleaux continu (40), et des pièces de cage (50, 52) qui sont fixés au bloc d'entraînement intermédiaire (32) et qui retiennent les rouleaux de roulement (34) dans le chemin de roulement de rouleaux continu (40), au moins sur les portions du chemin de roulement de rouleaux continu (40) qui sont situées entre les surfaces espacées (42).

6. Joint universel tripode télescopique selon la revendication 5, dans lequel les pièces (50, 52) présentent des ailes (54) en surplomb par rapport aux rebords supérieurs et inférieurs (46, 48) dans les portions du chemin de roulement de rouleaux continu (40) situées entre les surfaces espacées (42), et des chapes (56) prévues aux angles du chemin de roulement de rouleaux continu (40) qui aboutissent aux surfaces espacées (42), et dans lequel les rouleaux de roulement (34) qui sont contigus aux surfaces espacées (42) sont maintenus entre les rebords supérieurs et inférieurs (46, 48) par de la graisse jusqu'à ce que le joint universel tripode télescopique (10) soit assemblé.

7. Joint universel tripode télescopique selon la revendication 1 ou 2, dans lequel les éléments de roulement sont des rouleaux (134) et dans lequel les moyens (136) du type cage à rouleaux comprennent des rebords supérieurs et inférieurs (146, 148) du bloc d'entraînement intermédiaire (132) qui retiennent les rouleaux de roulement (134) dans des positions contigues aux surfaces espacées (142), et des éléments (150) qui sont fixés au bloc d'entraînement intermédiaire (132) pour retenir les rouleaux de roulement (134) entre les rebords (146, 148);

8. Joint universel tripode télescopique selon la revendication 7, dans lequel les éléments servant à retenir les rouleaux de roulement (134) comprennent des pivots (150) qui sont fixés au rebords supérieurs et inférieurs (146, 148) du bloc d'entraînement intermédiaire (132) et qui servent d'axes de rotation pour les rouleau: de roulement (134) de façon qu'ils coopèrent avec les surfaces planes (22) de la gorge d'entraînement radiale (20) dans laquelle le bloc d'entraînement intermédiaire (132) est disposé.

9. Joint universel tripode télescopique selon l'une quelconque des revendications 1 à 8, dans lequel les surfaces espacées (42) de chaque bloc d'entraînement intermédiaire (32) sont parallèles l'une à l'autre et sont disposés parallèlement aux surfaces planes (22) orientées radialement de la gorge d'entraînement radiale (20) dans laquelle le bloc d'entraînement intermédiaire (32) est disposé.

*Fig. 1*

*Fig.2*

*Fig.3*

EP 0 244 064 B1

Fig.4

Fig.5

Fig.6

Fig.7

Fig.8

Fig.9